**Europäisches Patentamt**

**European Patent Office**

**Office européen des brevets**

(19)

(11) Veröffentlichungsnummer: **0 085 778**
**A1**

(12) ## EUROPÄISCHE PATENTANMELDUNG

(21) Anmeldenummer: **82111775.1**

(22) Anmeldetag: **18.12.82**

(51) Int. Cl.³: **C 08 L 27/06**
**C 08 K 7/00**

(30) Priorität: **29.01.82 DE 3202919**

(43) Veröffentlichungstag der Anmeldung:
**17.08.83 Patentblatt 83/33**

(84) Benannte Vertragsstaaten:
**AT BE CH DE FR GB IT LI LU NL SE**

(71) Anmelder: **DYNAMIT NOBEL AKTIENGESELLSCHAFT**
**Patentabteilung Postfach 1209**
**D-5210 Troisdorf, Bez. Köln(DE)**

(72) Erfinder: **Budich, Wolfgang**
**Rubensstrasse 121**
**D-5210 Troisdorf-Eschmar(DE)**

(72) Erfinder: **Gasper, Bertram**
**Im Feldbruch 69**
**D-5210 Troisdorf-Spich(DE)**

(72) Erfinder: **Kurth, Josef**
**Am Hang 20a**
**D-5210 Troisdorf-Spich(DE)**

(72) Erfinder: **Scharf, Karl-Günter**
**Schwalbenweg 5**
**D-5210 Troisdorf-Spich(DE)**

(72) Erfinder: **Wissinger, Waldemar**
**Im Urnenfeld 19**
**D-5200 Siegburg(DE)**

(54) **Glasfaserverstärkte Polyvinylchlorid-Zusammensetzung.**

(57) Glasfaserverstärkte Polyvinylchlorid-Zusammensetzung in der auf 100 Gew.-Teile Polyvinylchlorid, das einen K-Wert zwischen 55 und 75 aufweist, 40 bis 100 Gew.-Teile Glasfasern mit einem Durchmesser zwischen 5 und 25 µm bei einer Länge von 0,5 bis 12 mm und 1 bis 25 Gew.-Teile mineralischer Füllstoff mit einem mittleren Teilchendurchmesser unter 50 µm enthalten sind.

Fig 1

EP 0 085 778 A1

Troisdorf, den 4 Jan. 1981
OZ 82003    MG/Bd

DYNAMIT NOBEL AKTIENGESELLSCHAFT
Troisdorf Bez. Köln

Glasfaserverstärkte Polyvinyl-Zusammensetzung

Die Erfindung bezieht sich auf eine glasfaserverstärkte Polyvinylchlorid-Zusammensetzung aus Polyvinylchlorid, Glasfasern und von den Glasfasern unterschiedlichen anorganischen Füllstoffen und ggf. üblichen Zuschlagsstoffen wie Gleitmittel, Stabilisatoren, Verarbeitungshilfsmitteln, Farbmitteln o.dgl.

Auf dem Gebiet der Kunststoffe bemüht man sich, durch Kombination von Füllstoffen und Verstärkungsmitteln mit klassischen Thermoplasten die Palette der angebotenen Werkstoffe zu erweitern. Hierbei wird einerseits die Anhebung des Festigkeits- und Steifigkeitsniveaus angestrebt und zum anderen auch eine Verbilligung. Unter inaktiven Füllstoffen versteht man allgemein Zusätze in fester Form, die sich hinsichtlich ihrer Zusammensetzung und Struktur von der Kunststoffmatrix unterscheiden, es handelt sich meist um anorganische Materialien, die auch Extenderfüllstoffe genannt werden, wie beispielsweise Calciumkarbonat, hydrati-

- 2 -

sierte Tonerden und Alumino-Silikate. Unter aktiven Füll-stoffen versteht man solche, die gezielt bestimmte mechanische oder physikalische Eigenschaften des Kunststoffs verbessern, sie werden meist auch verstärkende Füll-stoffe genannt. Die besten Verstärkungsmittel sind allgemein faseriger Struktur, das am häufigsten verwendete Verstärkungsmittel sind Glasfasern. Während die inaktiven Füllstoffe meist die Zugfestigkeit und Zähigkeit des Kunststoffes eher erniedrigen, chemisch inaktiv und preiswert sind, wird durch verstärkende Kunststoffe, wie Glasfasern ein Versteifungseffekt und eine gute Kräfteeinleitung mit geringer Schwindung bei chemischer Inaktivität erzielt. Nachteilig ist bei den verstärkenden Kunststoffen wie Glasfasern die Anisotropie sowie die Orientierung der Glasfasern bei der Verarbeitung der Kunststoffmasse.

Aus der DE-AS 25 40 639 ist eine pulverförmige glasfaserverstärkte Strangpreßmasse auf der Basis von Polyvinylchlorid bekannt, die auf der Basis von 15 bis 30 Gew.-Teilen mineralischer Füllstoffe mit einem mittleren Teilchendurchmesser unter 50 µm, 1,5 bis 3 Gew.-Teilen wenigstens eines Schmiermittels und 15 bis 30 Gew.-Teilen Glasfasern auf 100 Gew.-Teile Polyvinylchlorid aufgebaut ist. Diese Masse ermöglicht das Herstellen von verstärkten Gegenständen mit einer glatten Oberfläche und homogener Struktur im Strangpreßverfahren.

Wie aus der DE-AS 25 40 639 und auch anderen Literaturstellen bekannt, ergeben sich erhebliche Schwierigkeiten, größere Mengen von Glasfasern in thermoplastische Kunststoffe, insbesondere auch in Polyvinylchlorid homogen einzuarbeiten. Hierbei werden nicht nur die Verarbeitungsmaschinen, wie Kneter, Mischer, Extruder hoch auf Verschleiß beansprucht, sondern auch die Homogenisierung, d.h. die gleichmäßige Verteilung der Glasfasern innerhalb des Thermoplasten als auch die Haftung zwischen Glasfaser und

- 3 -

Thermoplasten werfen Probleme auf. So ist es bereits bekannt, Glasfasern einer Oberflächenbehandlung zu unterziehen, das bekannteste ist das Silanisieren, um die Haftung zum Kunststoff zu vergrößern. Wir verweisen hierzu beispielsweise auf den Aufsatz von B.W. Lipinsky, Silane lösen Haftprobleme, in defazet, 28. Jahrg.,Nr.5,1974,S.207-211. In der britischen Patentschrift 1 345 841 wird eine glasfaserverstärkte thermoplastische Masse beschrieben, der auf 100 Gew.-Teile thermoplastischem Kunststoff 5 bis 150 Gew.-Teile Glasfasern und zusätzlich 0,5 bis 1,5 Gew.-Teile eines speziellen Haftvermittlers auf Basis von Metallocenen zugesetzt wird.

Der Erfindung liegt die Aufgabe zugrunde, eine glasfaserverstärkte Zusammensetzung auf Basis Polyvinylchlorid zu schaffen, die bei höheren Glasfaseranteilen als nach der DE-AS 25 40 639 für Strangpreßmassen bekannt sind, dennoch ohne zusätzlichen speziellen Haftvermittler gemäß der britischen Patentschrift 1 345 841 verbesserte mechanische Eigenschaften aufweist und sich einwandfrei zu homogenen Formkörpern verarbeiten läßt.

Die Erfindung löst die gestellte Aufgabe durch eine Zusammensetzung, bei der auf 100 Gew.-Teile Polyvinylchlorid, das einen K-Wert zwischen 55 und 75 aufweist, 40 bis 100 Gew.-Teile Glasfasern mit einem Durchmesser zwischen 5 und 25 µm bei einer Länge von bis zu 12 mm und 1 bis 25 Gew.-Teile mineralischer Füllstoff mit einem mittleren Teilchendurchmesser unter 50 µm enthalten sind. Überraschend hat sich herausgestellt, daß durch den Einsatz relativ geringer Anteile mineralischer pulvriger Füllstoffe zusammen mit relativ hohen Anteilen von Glasfasern eine verstärkte Polyvinylchlorid-Masse erzielt wird, die sich noch ausgezeichnet insbesondere durch Strangpressen verarbeiten läßt und ein ausgewogenes Eigenschaftsbild zeigt. Insbesondere kam der Elastizitätsmodul gegenüber unverstärktem Poly-

- 4 -

vinylchlorid gesteigert werden, wobei mit der erfindungsgemäßen Masse mindestens 8000 N/mm$^2$ bei 23°C als Elastizitätsmodul für stranggepreßte Produkte in Strangpreßrichtung erzielt werden, gemessen nach DIN 53457.

Unter Polyvinylchlorid wird Masse-, Suspensions-, oder Emulsions-PVC mit einem K-Wert zwischen 55 und 75 verstanden, außerdem Polyvinylidenchlorid, nachchloriertes Polyvinylchlorid und die aus einem chlorierten Monomeren und mindestens einem damit copolymerisierbaren Monomeren erhaltenen Copolymeren, z.B. Homopolymer oder Co- bzw. Pfropf-Polymere mit z.B. Ethylen-Vinylacetat, Acrylat, Vinylacetat, chloriertem Polyethylen, Butadien, Polyolefinen o.ä. als Co- bzw. Pfropf-Componente, sowie Mischungen dieser Stoffe.

Die mineralischen Füllstoffe zusätzlich zu den Glasfasern dienen in diesen geringen Mengen kaum der Verbilligung der Zusammensetzung, sondern im wesentlichen zur Verbesserung des Verarbeitungsverhaltens, wobei die mechanischen Eigenschaften der Masse nur geringfügig beeinflußt werden. Ein zu hoher mineralischer Füllstoffgehalt beeinflußt die gerade durch den Einsatz von Glasfasern gewünschten Verbesserungen der mechanischen Eigenschaften negativ. Als Füllstoff sind mineralische Füllstoffe, wie z.B. natürliche oder gefällte Kreide, Kieselkreide, kolloidale Kieselsäure, Aluminosilikate, oder hydratisierte Tonerde ohne oder mit entsprechender Oberflächenbehandlung, allein oder in Abmischungen untereinander verwendbar. Die Korngröße der Füllstoffe soll den Faserdurchmesser der Glasfasern möglichst nicht wesentlich überschreiten, d.h. der maximale Korndurchmesser des Füllstoffes soll kleiner 50 μm, bevorzugt kleiner 20 μm sein.

- 5 -

Als Ausgangsmaterial für Glasfasern dienen je nach Aufbereitungsverfahren entweder endlose oder geschnittene Glasfasern mit einem bevorzugten Filamentdurchmesser zwischen 5 und 25 µm. Bei geschnittenen Fasern soll die Ausgangslänge mindestens 0,5 mm betragen, bevorzugt zwischen 3 und 12 mm. Durch Aufbereitung und Verarbeitung wird die Ausgangslänge sowieso auf eine Endlänge zwischen ca. 0,3 bis 1,5 mm gebrochen, beispielsweise beim Strangpressen. Grundsätzlich sind alle Typen von Glasfasern für die Erfindung verwendbar, welche mit PVC verträglich sind. Bevorzugt werden jedoch solche Fasern verwendet, die durch eine entsprechende Oberflächenbehandlung mit Zusatz von Haftvermittlern wie z.B. Vinylsilan und substituierten Alkylsilanen, z.B. Chloralkyl-, Aminoalkyl-, Diaminoalkyl-Silane u.a. vorbehandelt sind. Diese Vorbehandlung findet in der Regel jedoch beim Herstellungsprozeß der Glasfasern statt und nicht bei der Verarbeitung der PVC-Massen. Durch den erfindungsgemäßen Einsatz von 40 bis 100 Gew.-Teilen Glasfasern auf 100 Gew.-Teile PVC wird ein E-Modul von mindestens 8000 N/mm$^2$ im verarbeiteten Produkt erreicht.

Unmodifiziertes Polyvinylchlorid weist neben einer guten Schlagzähigkeit eine nur mäßige Kerbschlagzähigkeit auf. Durch den Zusatz von Glasfasern wird die Kerbschlagzähigkeit zwar nur gering beeinflußt, die gute Schlagzähigkeit jedoch auf das Niveau der Kerbschlagzähigkeit abgesetzt. Aus diesem Grunde wird erfindungsgemäß der Zusammensetzung Modifier wie beispielsweise Ethylen-Vinylacetat, Acrylate, chloriertes Polyethylen, Acryl-Butadien-Styrol, Metacryl-Butadien-Styrol o.dgl. bis zu 30 Gew.-Teilen auf 100 Gew.-Teile PVC zugesetzt. Gegenüber den üblichen Mengen ar Zusätzen von Gleitmitteln bei der Verarbeitung von PVC ergibt sich für die erfindungsgemäßen Zusammensetzungen ein gegenüber bekannten Zusammensetzungen wesentlich erhöhter Gleitmittelzusatz. Dieser liegt bei der erfindungsgemäßen Zusammensetzung bevorzugt zwischen 2,5 bis 5,5 Gew.-Teilen Gleitmittel auf 100 Gew.-Teile Polyvinylchlorid, wobei der Gleitmittelanteil mit steigendem Glasfaser- und Füllstoff-Anteil steigt. Verwendet werden die bei der Verarbeitung von PVC und PVChaltigen Formmassen bekannten Gleitmittel, d.h. in der Regel Gemische von sogenannten inneren, d.h. mit PVC gut verträglichen und sogenannten äußeren Gleitmitteln, d.h. mit PVC weniger gut verträglichen Produkten. Zur Gruppe der inneren Gleitmittel gehören z.B. Glycerin, Mono-, -di-, und -triester natürlicher oder oxidierter Carbonsäuren mit Kettenlängen von $C_{12}$ bis $C_{40}$, Fettalkohole der o.gen. Kettenlängen, neutrale und basische Metallseifen, bevorzugt Stearate, der Metalle, Blei, Calzium, Barium, Magnesium, Cadmium u.a. $C_{10}$ bis $C_{40}$-Alkohole verestert mit $C_{12}$ bis $C_{36}$-Säuren, Phtalsäureester langkettiger Alkohole usw. Zur Gruppe der äußeren Gleitmittel gehören z.B. Fettsäuren $C_{12}$ bis $C_{40}$ bzw. substituierte (oxidierte) Fettsäuren, Paraffinöle und feste Paraffine, Polyethylene bzw. oxidierte Polyethylene, Fettsäureamide, Silikonöle und ähnliches.

Darüber hinaus werden die bei der Verarbeitung von PVChaltigen Mischungen üblichen sonstigen Zusätze, insbesondere Stabilisatoren eingesetzt, wie z.B. komplexe Bariumcadmium-seifen, Bleisalze bzw. Bleiseifen, komplexe Calzium-Zink-seifen, Alkylzinnmerkaptoverbindungen oder Alkylzinncarboxylate ferner organische Stabilisatoren wie epoxidierte Öle oder Ester, Diphenylthioharnstoffe, Phenylindol, arylische oder alkylische oder arylisch-alkylisch gemischte Phosphite einzeln oder in Abmischungen. Darüber hinaus können der Zusammensetzung auch besonders zur Stabilisierung der Modifizierungs- bzw. Co- oder Pfropf-Componenten bekannter Antioxydantien, wie z.B. sterisch gehinderte Phenole oder Bis-Phenol o.dgl. zugesetzt werden. Bevorzugte Mengen liegen zwischen 1 und 5 Gew.-Teilen Stabilisatoren auf 100 Gew.-Teile PVC.

- 7 -

Weitere bekannte Zusätze sind Verarbeitungshilfen, Weichmacher, auch Plastifizierhilfen und Farbmittel.

Eine bevorzugte Zusammensetzung nach der Erfindung enthält auf 100 Gew.-Teile PVC, das ein K-Wert zwischen 55 und 75 aufweist, 40 bis 80 Gew.-Teile Glasfasern mit einem Durchmesser zwischen 5 und 25 $\mu$m bei einer Länge von 0,5 bis 12 mm, 1 bis 15 Gew.-Teile eines pulvrigen mineralischen Füllstoffes mit einem mittleren Teilchendurchmesser unter 50 $\mu$m und 2,5 bis 5,0 Gew.-Teile Gleitmittel und bis zu 30 Gew.-Teilen Modifier.
Die vorliegende Erfindung besitzt bemerkenswerte Vorteile, die insbesondere die Verwendung der glasfaserverstärkten Polyvinylchlorid-Zusammensetzung zur Herstellung von Formkörpern, insbesondere durch Strangpressen geeignet macht, wobei die Formkörper in Strangpreßrichtung einen Elastizitäts-Modul von mindestens 8000 N/mm$^2$ bei 23°C aufweisen. Die hergestellten Formkörper weisen je nach Glasanteil und Füllstoffanteil eine sehr feine mikroporöse Oberfläche auf, wodurch die Haftung zu nachfolgenden Überzügen, beispielsweise auf Basis PVC oder eines anderen Thermoplasten wesentlich verbessert ist. Die erfindungsgemäße Zusammensetzung kann zum Herstellen von Kernkörpern mit hoher mechanischer Steifigkeit*dienen, die dann nachträglich oder gleichzeitig mit einem unverstärkten Thermoplasten auf gleicher oder anderer Basis ummantelt werden, beispielsweise durch Extrusion, Laminierung oder Tauchen. Die Ummantelung kann auch nur über einen Teil der Oberfläche des Formkörpers vorgenommen werden. Für die Oberflächenveredelung kommen insbesondere mit PVC verträgliche Stoffe, die ggf. auch besonders wetterbeständig sind, wie beispielsweise Acrylate, Polyester, Polymethylacrylate, acrylhaltige Polymere o.dgl. in Frage, bzw. Mehrfachbeschichtungen mit unterschiedlichen Werkstoffen.

* und Festigkeit

Die erfindungsgemäße Zusammensetzung ermöglicht die Herstellung von Formkörpern mit wesentlich gegenüber dem unverstärkten Kunststoff verbesserten mechanischen Eigenschaften, so daß die Formkörper zu tragenden Konstruktionen herangezogen werden können und beispielsweise im Kunststoffanwendungsbereich vielfach üblicher Einsatz von metallischen Verstärkungen bei Profilkonstruktionen entfallen kann, bzw. die Wandstärken der Profile verringert werden können.

Die verschiedenen Bestandteile der erfindungsgemäßen Zusammensetzung können untereinander nach bekannten Techniken zur Herstellung von extrudierbaren Gemischen homogenisiert und dann extrudiert werden.

Die folgenden Beispiele 1 bis 18 dienen der Verdeutlichung und Erläuterung der Erfindung. Hierbei sind die Beispiele 1 bis 6, 8, 10, 12 und 13 als Vergleichsbeispiele bzw. außerhalb der Erfindung liegende Beispiele zu werten, während die Beispiele 7, 9, 11, und 14 bis 18 der Erläuterung der Erfindung dienen. Die Beispiele sind in der nachfolgenden Tabelle wiedergegeben. Für die Zusammensetzung können die Teile in trockener pulvriger Form vermischt und plastifiziert werden, hieraus werden mittels eines z.B. Einspindel-Schneckenextruders Platten einer Dicke von ca. 4 mm und Breite von ca. 500 mm extrudiert. Die Extrusion erfolgte bei Zylinder-Temperaturen aufsteigend von 160 bis 190°C mit einer Werkzeugtemperatur von 195°C. Aus diesen Platten wurden die Probekörper gemäß den Prüfnormen hergestellt.

Die Bestandteile der Zusammensetzung nach den Beispielen sind in Gewichtsteilen ausgedrückt, für die Beispiele 1 bis 13 wird ein Suspensions-PVC mit einem K-Wert 64 und für die Beispiele 14 bis 18 ein Suspensions-PVC mit einem K-Wert 57 eingesetzt. Die in den Beispielen 10 bis 18 eingesetzten unterschiedlichen Modifier sind mit ihrer Abkürzung gekennzeichnet.

- 9 -

Die Eigenschaften sind an den extrudierten Platten gemessen worden und zwar jeweils in Längs- und Querrichtung. Der Elastizitätsmodul ist nach DIN 53457 bestimmt, die Kerbschlagzähigkeit nach Izod ASTM D 256 die Reißfestigkeit nach DIN 53455, die Reißdehnung nach DIN 53455 und die Formbeständigkeit A in °C nach ISO R 75.

Das Beispiel 1 enthält eine unverstärkte PVC-Masse ohne weitere Füllstoffe, als Vergleichsbeispiel Die Beispiele 3 und 6 zeigen jeweils eine verstärkte Masse mit 30 bzw. 50 Gew.-Teilen Glasfasern ohne weitere Füllstoffe. Hieraus ist ersichtlich, daß durch den Zusatz der Glasfasern der E-Modul ansteigt, während die Reißfestigkeit bereits etwas abnimmt. Durch den Zusatz von geringen Mengen von mineralischem Füllstoff, hier Calziumcarbonat gemäß Beispiel 7 kann jedoch gegenüber dem Beispiel 6 ohne mineralischen Füllstoff sowohl der E-Modul als auch die sonstigen mechanischen Eigenschaften bis auf die Dehnung erheblich verbessert werden.

Die Beispiele 2, 5 und 9 zeigen in einer Vergleichsreihe, wie bei unverstärktem PVC mit kontinuierlicher Zugabe von Glasfasern zur Verstärkung bei konstantem Anteil von mineralischem Füllstoff, hier Calziumcarbonat, das Eigenschaftsbild der mechanischen Eigenschaften verändert wird. Insbesondere aus dem Vergleich der Beispiele 7 und 9 wird deutlich, daß ein sich erhöhender Zusatz mineralischer Füllstoffe zu den Glasfasern keine wesentliche Verbesserung der Eigenschaften bringt, vielmehr sich die Eigenschaften bei den erfindungsgemäß gewählten Relationen annähernd in einem Gleichgewicht befinden, d.h. bei leicht abfallendem E-Modul und Kerbschlagzähigkeit und noch ansteigender Reißfestigkeit im Vergleich zum Produkt ohne mineralische Füllstoffe, siehe Beispiel 6, gute Eigenschaften erzielt werden. Der Vergleich der Beispiele 4 und 8 zeigt, daß bei zu geringen Anteilen an Glasfasern noch nicht die erfindungsgemäß ge-

- 10 -

wünschte hohe Versteifungswirkung der Formkörper auf Basis der verstärkten PVC-Masse erreicht wird.

Das Beispiel 10 zeigt eine Zusammensetzung, die ein schlagzähes Modifizierungsmittel enthält, um die Kerbschlagzähigkeit zu erhöhen, dies geht jedoch zu Lasten des insbesondere Elastizitätsmoduls und der Reißfestigkeit. Diese kann dann gemäß Beispiel 11 durch geringe Zusätze von mineralischem Füllstoff, wie Calziumcarbonat, bereits wieder angehoben werden. Die Beispiele 12 und 13 zeigen den weiteren Zusatz von Modifizierungsmitteln in höheren Anteilen, die sich jedoch trotz der Erhöhung der Kerbschlagzähigkeit insbesondere nicht verbessernd auf die mechanischen Eigenschaften, sondern verringernd auswirken. Die Beispiele 14 bis 18 zeigen den Zusatz geringerer Anteile von Modifizierungsmitteln zur Erhöhung der Kerbschlagzähigkeit, bei konstantem Zusatz von geringen Mengen von Calziumcarbonat bei steigendem Glasfaseranteil. Aus diesen Beispielen ist die Verbesserung des E-Moduls mit steigendem Glasfaseranteil bei gleichzeitigem Erhalt der Kerbschlagzähigkeit und der Reißfestigkeit im gewünschten Umfang zu ersehen. Mit der Kerbschlagzähigkeit wird auch die Schlagzähigkeit dieser Zusammensetzungen verbessert.

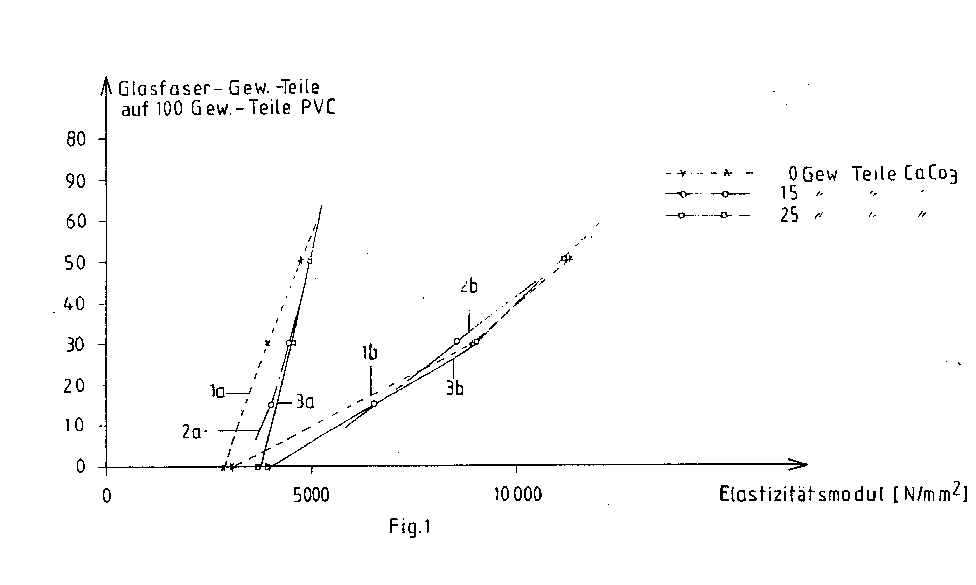

In der Fig. 1 ist der Elastizitäts-Modul in Abhängigkeit vom Glasfaseranteil und dem mineralischen Füllstoff in der Zusammensetzung dargestellt. Die Kurven 1a und 1b zeigen den Verlauf des Elastizitäts-Moduls gemäß den Beispielen 1, 3, 6 in Längs- und Querrichtung der Platte bei 0 Gew.-Anteilen Calziumcarbonat, die Kurven 2a, 2b den Elastizitäts-Modul bei 15 Gew.-Teilen Calziumcarbonat gem. den Beispielen 4,8 und die Kurven 3a, 3b bei 25 Gew.-Teilen Calziumcarbonat gem. den Beispielen 2, 5, 9.

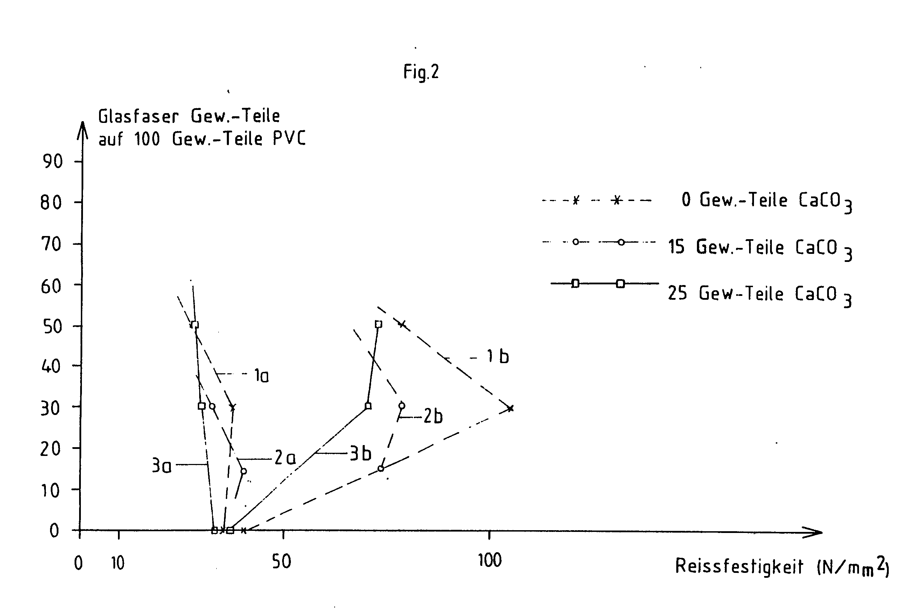

In der Fig. 2 ist die Abhängigkeit der Reißfestigkeit von dem Glasfaseranteil und mineralischen Füllstoffanteil entsprechend den Beispielen 1, 3, 6 in Kurven 1a, b,

- 11 -

den Beispielen 4, 8 in Kurven 2a, b und den Beispielen 2, 5, 9 in Kurven 3a, b dargestellt. Hieraus ist erkennbar, daß die erfindungsgemäß bevorzugten geringen Mengen an mineralischem Füllstoff zusätzlich zu den Glasfasern einerseits die Verarbeitbarkeit der Masse verbessern, jedoch die mechanischen Eigenschaften nur in geringem Umfange negativ belasten und im wesentlichen die durch den Zusatz der Glasfasern erzielten verstärkenden Eigenschaften erhalten.

Überraschend ist die gute Verarbeitbarkeit der erfindungsgemäßen Zusammensetzung, die trotz der hohen Glasfaseranteile zu einem homogenen Produkt führen, das sich durch sehr gute mechanische Eigenschaften und Schrumpfarmut (gegen Null) auszeichnet.

Schrumpfarmut bedeutet hierbei, daß die bei der Verarbeitung der erfindungsgemäßen Masse zu Profilen oder Rohren eingefrorenen Spannungen später im Einsatz der Produkte auch bei höheren Temperaturen nicht ausgelöst werden, was z.B. durch einen Wärmelagerungsversuch bei $100^{\circ}C$ nachweisbar ist.

| Beispiele | 1 | 2 | 3 | 4 | 5 |
|---|---|---|---|---|---|
| S-PVC, K-Wert 64 (57) | 100 | 100 | 100 | 100 | 100 |
| Stabilisatorgemisch | 3 | 3 | 3 | 3 | 3 |
| Modifier | – | – | – | – | – |
| Glasfasern, 6 mm lang, $\varnothing$ 10 $\mu$m | – | – | 30 | 15 | 30 |
| $CaCo_3$ (mittl. Teilchen $\varnothing$<10 $\mu$m) | – | 25 | – | 15 | 25 |
| 1,2 Hydroxystearinsäure | – | – | – | 0,3 | 0,6 |
| Oxydiertes PE-Wachs | 0,3 | 0,3 | 0,5 | 0,5 | 0,5 |
| Ca-stearat | 0,5 | 0,5 | 0,5 | 0,5 | 1,0 |
| C 16/18-Wachsester /epox. Sojab. | 1,0 | 1,0 | 1,0 | 1,0 | 1,0 |
| E-Modul $N/mm^2$ bei 23°C, quer | 2990 | 3700 | 4100 | 3960 | 4540 |
| längs | 3020 | 3900 | 8940 | 6500 | 9010 |
| Kerbschlagzähigkeit nach Izod J/m | | | | | |
| quer | 55 | 54 | 35 | 36 | 33 |
| längs | 65 | 67 | 54 | 45 | 45 |
| Reißfestigkeit $N/mm^2$, quer | 35,0 | 33,0 | 37,1 | 40,1 | 30,5 |
| längs | 39,8 | 36,0 | 105,1 | 72,3 | 70,4 |
| Reißdehnung %, | 28 | 43 | 7 | 8 | 5 |
| | 49 | 53 | 3 | 2 | 2 |
| Formbeständigkeit A in °C | | | | | |
| nach ISO R 75 quer | 75 | 75 | 73 | 73 | 72 |
| längs | 76 | 77 | 79 | 77 | 81 |

| Beispiele | 6 | 7 | 8 | 9 | 10 |
|---|---|---|---|---|---|
| S-PVC, K-Wert 64 (57) | 100 | 100 | 100 | 100 | 85 |
| Stabilisatorgemisch | 3 | 3 | 3 | 3 | 3 |
| Modifier | - | - | - | - | 15 MBS |
| Glasfasern, 6 mm lang, $\emptyset$ 10 $\mu$m | 50 | 50 | 30 | 50 | 50 |
| $CaCo_3$ (mittl. Teilchen $\emptyset$<10 $\mu$m) | - | 5 | 15 | 25 | - |
| 1,2 Hydroxystearinsäure | 0,3 | 0,3 | 0,6 | 0,6 | 0,3 |
| Oxydiertes PE-Wachs | 0,5 | 0,5 | 0,5 | 0,7 | 0,5 |
| Ca-stearat | 1,0 | 1,0 | 1,0 | 1,0 | 1,0 |
| C 16/18-Wachsester /epox. Sojab. | 1,0 | 1,0 | 1,0 | 2,0 | 1,0 |
| E-Modul $N/mm^2$ bei 23°C, quer | 4680 | 5010 | 4380 | 4890 | 3660 |
| längs | 12.160 | 11.360 | 8460 | 11.500 | 10.260 |
| Kerbschlagzähigkeit nach Izod J/m | | | | | |
| quer | 36 | 41 | 39 | 39 | 44 |
| längs | 56 | 69 | 58 | 73 | 82 |
| Reißfestigkeit $N/mm^2$, quer | 27,3 | 36,3 | 31,4 | 38,2 | 29,2 |
| längs | 78,8 | 86,8 | 78,1 | 73,7 | 70,1 |
| Reißdehnung %, quer | 8 | 2 | 6 | 2 | 2 |
| längs | 2 | 2 | 2 | 2 | 2 |
| Formbeständigkeit A in °C | | | | | |
| nach ISO R 75 quer | 73 | 81 | 71 | 78 | 78 |
| längs | 86 | 86 | 83 | 84 | 87 |

0085778

| Beispiele | 11 | 12 | 13 | 14 | 15 |
|---|---|---|---|---|---|
| S-PVC, K-Wert 64 (57) | 85 | 70 | 80 | 100 (K 57) | 100 (K 57) |
| Stabilisatorgemisch | 3 | 3 | 3 | 4 | 4 |
| Modifier | 15 MBS | 30 MBS | 20 CPE | 10 (EVA) | 10 (EVA) |
| Glasfasern, 6 mm lang, $\varnothing$ 10 $\mu$m | 50 | 50 | 50 | 50 | 60 |
| $CaCo_3$ (mittl. Teilchen $\varnothing$<10 $\mu$m) | 5 | – | | 5 | 5 |
| 1,2 Hydroxystearinsäure | 0,3 | 0,3 | 0,3 | 0,2 | 0,2 |
| Oxydiertes PE-Wachs | 0,5 | 0,5 | 0,5 | – | – |
| Ca-stearat | 1,0 | 1,0 | 1,0 | 1,0 | 1,0 |
| C 16/18-Wachsester /epox. Sojab. | 1,0 | 1,0 | 1,3 | 3 | 3 |
| E-Modul N/mm$^2$ bei 23°C, quer | 4070 | 3150 | 3580 | 4230 | 4550 |
| längs | 11.730 | 8750 | 10.480 | 10.790 | 10.510 |
| Kerbschlagzähigkeit nach Izod J/m | | | | | |
| quer | 43 | 54 | 69 | 37 | 37 |
| längs | 91 | 176 | 133 | 69 | 75 |
| Reißfestigkeit N/mm$^2$, quer | 31,4 | 25,4 | 24,6 | 33,9 | 32,4 |
| längs | 98,9 | 72,7 | 64,6 | 83,8 | 91,2 |
| Reißdehnung %, quer | 2 | 2 | 2 | 2 | 2 |
| längs | 2 | 2 | 2 | 2 | 2 |
| Formbeständigkeit A in °C | | | | | |
| nach ISO R 75 quer | 71 | 67 | 72 | 68 | 67 |
| längs | 79 | 77 | 77 | 72 | 72 |

| Beispiele | 16 | 17 | 18 |
|---|---|---|---|
| S-PVC, K-Wert 64 (57) | 100 (K 57) | 100 (K 57) | 100 (K 57) |
| Stabilisatorgemisch | 4 | 4 | 4 |
| Modifier | 10 (EVA) | 10 (EVA) | 10 (EVA) |
| Glasfasern, 6 mm lang, $\emptyset$ 10 $\mu$m | 70 | 80 | 100 |
| CaCo$_3$ (mittl. Teilchen $\emptyset$<10 $\mu$m) | 5 | 5 | 5 |
| 1,2 Hydroxystearinsäure | 0,2 | 0,3 | 0,4 |
| Oxydiertes PE-Wachs | – | – | – |
| Ca-stearat | 1,0 | 1,0 | 1,0 |
| C 16/18-Wachsester /epox. Sojab. | 3 | 3,5 | 3,8 |
| E-Modul N/mm$^2$ bei 23$^o$C, quer | 4860 | 4880 | 5870 |
| längs | 12.730 | 15.560 | 20.670 |
| Kerbschlagzähigkeit nach Izod J/m | | | |
| quer | 39 | 39 | 53 |
| längs | 80 | 59 | 72 |
| Reißfestigkeit N/mm$^2$, quer | 28,4 | 21,3 | 20,7 |
| längs | 88,6 | 75,7 | 66,6 |
| Reißdehnung %, quer | 2 | 2 | 2 |
| längs | 2 | 2 | 2 |
| Formbeständigkeit A in $^o$C | | | |
| nach ISO R 75 quer | 66 | 69 | 66 |
| längs | 75 | 77 | 76 |

0085778

Patentansprüche

1. Glasfaserverstärkte Polyvinylchlorid-Zusammensetzung aus Polyvinylchlorid, Glasfasern und von den Glasfasern unterschiedlichen anorganischen Füllstoffen und ggf. üblichen Zuschlagsstoffen wie Gleitmittel, Stabilisatoren, Verarbeitungshilfsmitteln, Farbmitteln, d a d u r c h   g e k e n n z e i c h n e t , daß in der Zusammensetzung auf 100 Gew.-Teile Polyvinylchlorid, das einen K-Wert zwischen 55 und 75 aufweist, 40 bis 100 Gew..-Teile Glasfasern mit einem Durchmesser zwischen 5 und 25 µm bei einer Länge bis zu 12 mm und 1 bis 25 Gew.-Teile mineralischer Füllstoff mit einem mittleren Teilchendurchmesser unter 50 µm enthalten sind.

2. Zusammensetzung nach Anspruch 1, dadurch gekennzeichnet, daß außerdem noch bis zu 30 Gew.-Teile Modifier enthalten sind.

3. Zusammensetzung nach Anspruch 1 oder 2, dadurch gekennzeichnet, daß außerdem noch 2,5 bis 5,5 Gew.-Teile Gleitmittel enthalten sind.

4. Zusammensetzung nach einem der Ansprüche 1 bis 3, dadurch gekennzeichnet, daß auf 100 Gew.-Teile Polyvinylchlorid, das einen K-Wert zwischen 55 und 75 aufweist, 40 bis 80 Gew.-Teile Glasfasern mit einem Durchmesser zwischen 5 und 25 µm bei einer Länge von 0,5 bis 12 mm, 1 bis 15 Gew.-Teile eines pulvrigen mineralischen Füllstoffes mit einem mittleren Teilchendurchmesser unter 50 um und 2,5 bis 5,0 Gew.-Teile Gleitmittel und bis zu 30 Gew.-Teilen Modifier enthalten sind.

0085778

5. Verwendung der glasfaserverstärkten Polyvinylchlorid-zusammensetzung nach einem der Ansprüche 1 bis 4 zur Herstellung von Formkörpern, insbesondere durch Strang-pressen, die in  zur Strangpreßrichtung einen E-Modul von mindestens 8000 N/mm$^2$ bei 23°C aufweisen.

Fig.1

Fig.2

Dynamit Nobel Aktiengesellschaft, Troisdorf

**Europäisches Patentamt**

# EUROPÄISCHER RECHERCHENBERICHT

**0085778**
Nummer der Anmeldung

EP 82 11 1775

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
| A | EP-A-0 001 013 (TBA) | | C 08 L 27/06<br>C 08 K 7/00 |
| | --- | | |
| A | CH-A- 428 201 (COCIETE ORGANICO) | | |
| | --- | | |
| D,A | LU-A- 73 377 (UGINE KUHLMANN)<br>* Anspruch 1; Seite 3, Zeile 8 * | 1 | |
| | ----- | | |

RECHERCHIERTE
SACHGEBIETE (Int. Cl. 3)

C 08 L
C 08 K

Der vorliegende Recherchenbericht wurde für alle Patentansprüche erstellt.

| Recherchenort<br>DEN HAAG | Abschlußdatum der Recherche<br>03-05-1983 | Prüfer<br>BOLETTI C.M. |
|---|---|---|